# EUROPEAN PATENT SPECIFICATION

(11) **EP 0 489 912 B1**
(45) Date of publication and mention of the grant of the patent: **18.09.1996**
(21) Application number: 90907476.7
(22) Date of filing: 29.05.1990
(51) Int. Cl.: C08L 67/02, C08L 25/04, C08L 55/02

(54) **THERMOPLASTIC RESIN COMPOSITION**
THERMOPLASTISCHE HARZZUSAMMENSETZUNG
RESINE THERMOPLASTIQUE

(30) Priority: 29.05.1989 JP 137092/89
(43) Date of publication of application: 17.06.1992
(73) Proprietor: Sumitomo Dow Limited, Osaka (JP)
(72) Inventor: HIRAI, Mikio, Niihama-shi, Ehima 792 (JP); HIRAI, Hikoichi, Niihama-shi, Ehime 792 (JP)
(74) Representative: von Kreisler, Alek, Dipl.-Chem.
(86) International application number: JP9000687
(87) International publication number: WO9015103

(56) References cited:
- EP-A- 0 284 086
- EP-A- 0 388 231
- DE-A- 3 733 839
- JP-A-61 204 270
- JP-A-62 179 554
- JP-A-62 285 947
- US-A- 4 554 315

## Description

The present invention relates to a thermoplastic resin composition which comprises a polyester resin, a rubber-reinforced styrene base resin and an epoxy-modified copolymer and is excellent in chemical resistance and impact resistance (namely notched Izod impact resistance).

Styrene base resins such as polystyrene, styreneacrylonitrile copolymers, ABS resins, and AES or AAS resins comprising EPDM rubber or acryl rubber as a rubber component have good property balance and dimensional stability and are used in various fields. In particular, they are used in the automobile industries. In this application, they should have chemical resistance such as resistance to gasoline and brake fluids, and improvement of such resistance is important. As a polymer having good chemical resistance, a saturated polyester resin is known. Since the saturated polyester resin has poor impact strength, it is proposed to compound the ABS resin therein (see Japanese Patent Publication Nos. 30421/1972 and 25261/1976). However, such resin composition does not have sufficient impact resistance.

As a result of the extensive study on the improvement of the above properties of the composition comprising the saturated polyester resin and the styrene base resins, it has been found that a thermoplastic resin composition having good chemical resistance and (notched Izod) impact strength is obtained by blending a saturated polyester, a styrene base resin and a specific epoxy-modified copolymer in a specific ratio.

Accordingly, the present invention provides a thermoplastic resin composition comprising:
(A) a saturated polyester resin,
(B) a graft polymerized or a rubbery polymer of a rubber-reinforced styrene base resin which is obtainable by polymerizing 50 to 90 % by weight of an aromatic vinyl monomer, 10 to 50 % by weight of a cyanated vinyl monomer and 0 to 40 % by weight other copolymerizable vinyl monomer in the presence of a rubbery polymer,
(C) an epoxy-modified copolymer which comprises 50 to 89.9 % by weight of an aromatic vinyl monomer, 10 to 49.9 % by weight of a cyanated vinyl monomer, 0.1 to 20 % by weight of an ethylenically unsaturated epoxy group-containing monomer and 0 to 39.9 % by weight of other copolymerizable vinyl monomer, and
(D) a styrene base copolymer which comprises 60 to 85% by weight of α-methylstyrene, 0 to 20% by weight of styrene, 15 to 40% by weight of a cyanated vinyl monomer and 0 to 25% by weight of at least one other copolymerizable vinyl monomer selected from the group consisting of alkyl unsaturated carboxylates and imide monomers,
   wherein a content of said saturated polyester resin (A) is from 90 to 10 parts by weight, a total content of said rubber-reinforced styrene base resin (B) and said epoxy-modified copolymer (C) is from 90 to 10 parts by weight and a content of said styrene base copolymer (D) is from 5 to 60 parts by weight based on 100 parts by weight of the total weight of the polymers (A), (B), (C) and (D), and a content of said rubbery polymer is from 5 to 40 % by weight and a content of said ethylenically unsaturated epoxy group-containing monomer is at least 0.001 % by weight based on the whole weight of the composition.

The present invention will be explained in detail.

As the saturated polyester resin (A) to be used in the present invention, polyethylene terephthalate, polybutylene terephthalate, a polyester-ether block polymer comprising a hard segment of polyester and a soft segment of polyether and the like are exemplified. The saturated polyester resin (A) can be prepared from 1,4-butanediol and terephthalic acid, or dimethyl terephthalate and ethylene glycol. They may be used independently or as a mixture of two or more of them.

The rubber-reinforced styrene base resin (B) is prepared by graft polymerizing 50 to 90 % by weight of an aromatic vinyl monomer, 10 to 50 % by weight of a cyanated vinyl monomer and 0 to 40 % by weight other copolymerizable vinyl monomer in the presence of a rubbery polymer.

Examples of the rubbery polymer are polybutadiene, styrene-butadiene copolymer, acrylonitrile-butadiene copolymer, ethylene-propylene copolymer, acrylate base copolymer and chlorinated polyethylene, each having a glass transition temperature of 0°C or lower. They may be used independently or as a mixture of two or more of them. They may be prepared by emulsion polymerization, solution polymerization, suspension polymerization, bulk polymerization and the like. In case of the emulsion polymerization, there is no specific limitation on a particle size and a gel content of the rubbery copolymer. Preferably, an average particle size is from 0.1 to 1 µm and a gel content is from 0 to 95 %.

Examples of the aromatic vinyl monomer are styrene, α-methylstyrene, o-methylstyrene, m-methylstyrene, p-methylstyrene, tert.-butylstyrene, α-methylvinyltoluene, dimethylstyrene, chlorostyrene, dichlorostyrene, bromostyrene, dibromostyrene, vinylnaphthalene and the like, and examples of the cyanated vinyl monomer are acrylonitrile, methacrylonitrile, fumaronitrile and the like. They may be used independently or as a mixture of two or more of them. Among them, styrene, α-methylstyrene and acrylonitrile are preferred.

As the other copolymerizable monomer, are exemplified alkyl unsaturated carboxylates such as methyl acrylate, ethyl acrylate, butyl acrylate, 2-ethylhexyl acrylate, methyl methacrylate, ethyl methacrylate, propyl methacrylate, 2-ethylhexyl methacrylate and the like; and imide monomers such as maleimide, N-phenylmaleimide, N-methylmale-imide, N-cyclohexylmaleimide and the like. They may be used independently or as a mixture of two or more of them.

When the monomer contents are outside the above ranges, compatibility between the rubber-reinforced styrene base resin (B) and the epoxy-modified copolymer (C) is deteriorated, so that the composition comprising them and the saturated polyester resin (A) has decreased impact strength.

There is no specific limitation on a ratio of the rubbery polymer to the monomers. Preferably, 20 to 80 % by weight of the rubbery polymer and 80 to 20 % by weight of the monomers are used. Also there is no specific limitation on a graft degree. Preferably, the graft degree is from 20 to 100 %. The graft polymerization can be carried out by conventional emulsion polymerization, solution polymerization, bulk polymerization, suspension polymerization or combinations thereof.

The epoxy-modified copolymer (C) may be prepared by polymerizing 50 to 89.9 % by weight of an aromatic vinyl monomer, 10 to 39.9 % by weight of a cyanated vinyl monomer, 0.1 to 20 % by weight of an ethylenically unsaturated epoxy group-containing monomer and 0 to 39.9 % by weight of other copolymerizable vinyl monomer. Preferably, 59.9 to 80 % by weight of the aromatic vinyl monomer, 19.9 to 40 % by weight of the cyanated vinyl monomer and 0.1 to 15 % by weight of the ethylenically unsaturated epoxy group-containing monomer are polymerized.

When the monomer contents are outside the above ranges, the copolymer (C) has decreased compatibility with the rubber-reinforced styrene base resin (B).

Examples of the aromatic vinyl monomer, the cyanated vinyl monomer and the other copolymerizable vinyl monomer are the same as exemplified in connection with the rubber-reinforced styrene base resin (B). They may be used independently or as a mixture of two or more of them. Among them, styrene, α-methylstyrene and acrylonitrile are preferred. In particular, α-methylstyrene and acrylonitrile are preferred.

The unsaturated epoxy monomer is a monomer having at least one polymerizable unsaturated bond and at least one epoxy group in a molecule. It includes an unsaturated glycidyl ester of the formula: 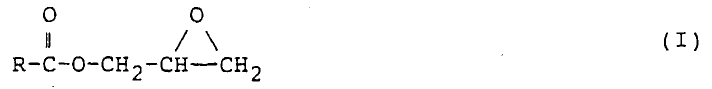 wherein R is a hydrocarbon group having a polymerizable ethylenically unsaturated bond, an unsaturated glycidyl ether of the formula: 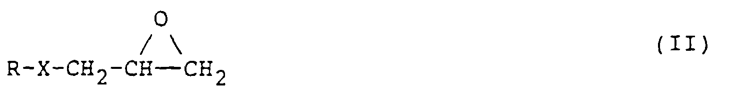 wherein R is the same as defined in the formula (I), and X is a divalent group: -CH₂-O- or 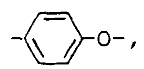 and an epoxyalkene of the formula: 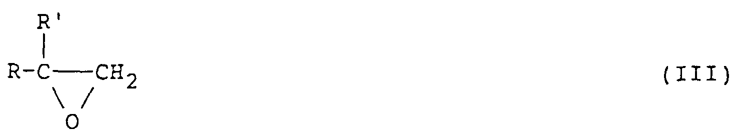 wherein R is the same as defined in the formula (I), and R' is hydrogen or methyl.

Specific examples of these epoxide monomers are glycidyl acrylate, glycidyl methacrylate, mono- and di-glycidyl ester of itaconic acid, mono-, di- and tri-glycidyl ester of butenetricarboxylic acid, mono- and di-glycidyl ester of citraconic acid, mono- and di-glycidyl ester of endo-cis-bicyclo[2.2.1]hept-5-ene-2,3-dicarboxylic acid (trade name: Nadic acid), mono- and di-glycidyl ester of endo-cis-bicyclo[2.2,1]hept-5-ene-2-methyl-2,3-dicarboxylic acid (trade name: Methylnadic acid), mono- and di-glycidyl ester of allylsuccinic acid, glycidyl ester of p-styrene-carboxylic acid, allylglycidyl ether, 2-methylallylglycidyl ether, styrene-p-glycidyl ether or p-glycidylstyrene, 3,4-epoxy-l-butene, 3,4-epoxy-3-methyl-1-butene, 3,4-epoxy-1-pentene, 3,4-epoxy-3-methyl-1-pentene, 5,6-epoxy-1-hexene, vinylcyclohexene monoxide, and the like.

The epoxy-modified copolymer (C) may be prepared by conventional emulsion polymerization, solution polymerization, bulk polymerization, suspension polymerization or combinations thereof. The ethylenically unsaturated epoxy group-containing monomer may be added in any suitable manner. It can be added to a polymerization system as a mixture with other monomer(s), or in the form of an aqueous solution.

There is no limitation on a molecular weight of the epoxy-modified copolymer (C). Preferably, it has a weight average molecular weight of from 10,000 to 1,000,000.

The styrene base copolymer (D) is prepared by copolymerizing 60 to 85% by weight of α-methylstyrene, 0 to 20% by weight of styrene, 15 to 40% by weight of a cyanated vinyl monomer and 0 to 25% by weight of at least one other copolymerizable vinyl monomer selected from the group consisting of alkyl unsaturated carboxylates and imide monomers. Examples of the cyanated vinyl monomer are the same as exemplified in connection with the rubber-reinforced styrene base resin (B). They may be used independently or as a mixture of two or more of them.

Specific examples of the copolymer (C) are styrene-acrylonitrile copolymer, a-methylstyrene-acrylonitrile copolymer, styrene-a-methylstyrene-acrylonitrile copolymer, styrene-acrylonitrile-methyl methacrylate copolymer, styrene-acrylonitrile-N-phenylmaleimide copolymer, α-methyl-styrene-acrylonitrile-N-phenhylmaleimide copolymer, styrene-acrylonitrile-N-phenylmaleimide-methyl methacrylate copolymer, a-methylstyrene-acrylonitrile-N-phenylmaleimide-methyl methacrylate copolymer and the like.

Contents of the saturated polyester resin (A), the rubber-reinforced styrene base resin (B), the epoxy-modified copolymer (C) and the styrene base copolymer (D) are from 90 to 10 parts of (A), from 90 to 10 parts of (B) + (C), and from 5 to 60 parts by weight of (D) based on 100 parts by weight of the total weight of the polymers (A), (B), (C) and (D).

Outside these ranges, good balance between the chemical resistance and impact strength which is one of the characteristics of the thermoplastic resin composition is not achieved.

Preferably, the composition comprises 15 to 70 parts by weight of (A), 85 to 30 parts by weight of (B) + (C) and up to 60 parts by weight of (D).

In view of impact strength and heat resistance, the composition comprises the styrene base copolymer (D) comprising 60 to 85 % by weight of α-methylstyrene, 0 to 20 % by weight of styrene, 15 to 40 % by weight of the cyanated vinyl monomer and 0 to 25 % by weight of the other copolymerizable vinyl monomer. Also, in view of heat resistance, preferably the composition comprises the styrene base copolymer (D) comprising 20 to 60 % by weight of the aromatic vinyl monomer, 10 to 40 % by weight of the cyanated vinyl monomer, 5 to 65 % by weight of of the imide monomer and 0 to 50 % by weight of the other copolymerizable vinyl monomer (except the imide monomer).

In the present invention, contents of the rubbery polymer and the ethylenically unsaturated epoxy group-containing monomer in the composition are important. When the content of the rubbery polymer is less than 5 % by weight of the whole composition, the impact resistance is deteriorated, while it is larger than 40 % by weight, moldability of the composition is deteriorated. Preferably, the content of the rubbery polymer is from 5 to 30 % by weight.

When the content of the ethylenically unsaturated epoxy group-containing monomer is less than 0.001 % by weight, the epoxy-modified copolymer (C) has decreased compatibility with the saturated polyester (A). Preferably, this content is at least 0.1 % by weight.

There is no specific limitation on a mixing sequence and states of the saturated polyester resin (A), the rubber-reinforced styrene base resin (B), the epoxy-modified copolymer (C) and the styrene base copolymer (D). For example, these four components may be mixed simultaneously in the form of pellets, beads or powder, or specific components are premixed and then other component(s) are mixed. As mixing means, any of conventional mixing apparatuses such as a Banbury mixer, rolls or an extruder may be used.

If desired, the thermoplastic resin composition of the present invention may contain additives, reinforcing materials or fillers such as an antioxidant, an ultraviolet light absorbing agent, a light stabilizer, an antistatic agent, a lubricant, a dye, a pigment, a plasticizer, a flame retardant, a mold release agent, glass fibers, metal fibers, carbon fibers, metal flakes and the like. In addition, the composition of the present invention may contain other thermoplastic resins such as polyacetal, polycarbonate, polyamide, polyphenyleneoxide, polymethyl methacrylate, polyvinyl chloride, etc.

The present invention will be illustrated by following Reference Examples, Examples and Comparative Examples, which will not limit the scope of the present invention. In Examples, "parts" and "%" are by weight.

### Reference Example 1 Polyester resin (A)

A-1: Polyethylene terephthalate (PET) RY-560 (manufactured by Toyo Boseki).

A-2: Polybutylene terephthalate (PBT) N-1000 (manufactured by Mitsubishi Rayon).

A-3: Polybutylene terephthalate (PBT) N-1200 (manufactured by Mitsubishi Rayon).

### Reference Example 2 Rubber-reinforced styrene base resin (B)

B-1:

Acrylonitrile (12 parts) and styrene (28 parts) are copolymerized in the presence of a polybutadiene latex having an average particle size of 0.45 µm and a gel content of 83 % (60 parts of solid content) to obtain an ABS graft polymer latex (graft degree: 35 %, an intrinsic viscosity of free acrylonitrile-styrene copolymer: 0.33). The intrinsic viscosity was measured in dimethylformamide at 30°C. (unit: 100 ml/g).

B-2:

In the same manner as in B-1, an ABS graft copolymer latex comprising polybutadiene (50 parts), acrylonitrile (15 parts) and styrene (35 parts) was prepared (graft degree: 55 %, an intrinsic viscosity of free acrylonitrile-styrene copolymer: 0.58).

B-3:

Acrylonitrile (15 parts) and styrene (35 parts) are emulsion copolymerized in the presence of a polybutyl acrylate latex having an average particle size of 0.3 µm (50 parts of solid content) to obtain an AAS graft polymer latex (graft degree: 50 %, an intrinsic viscosity of free acrylonitrile-styrene copolymer: 0.63).

B-4:

An AES graft copolymer (graft degree: 52 %, an intrinsic viscosity of free acrylonitrile-styrene copolymer: 0.60) was prepared by solution polymerizing ethylene-propylene-ethyllidenenorbornene copolymer (EPDM) (iodine value: 21, Mooney viscosity: 75, propylene content: 50 %) (50 parts), acrylonitrile (15 parts) and styrene (35 parts).

Each of the graft copolymers B-1, B-2 and B-3 was separated and recovered by adding one part of Sumilizer NW (1 part) as an antioxidant and two parts of trisnonylphenyl phosphite per 100 parts of the solid content in the latex and salting out the copolymer with magnesium sulfate to recover the copolymers. The graft copolymer B-4 was precipitated in methanol followed by separation and recovering.

### Reference Example 3 Epoxy-modified copolymer (C)

C-1: In a reactor which had been replaced with nitrogen, pure water (120 parts) and potassium persulfate (0.3 part) were charged and heated up to 65°C while stirring. Then, a monomer mixture solution of acrylonitrile (30 parts), styrene (65 parts), glycidyl methacrylate (5 parts) and tert.-dodecylmercaptan (0.3 parts) and an aqueous solution of emulsifier (30 parts) containing sodium dodecylsulfonate (2 parts) were continuously poured over 5 hours, respectively. Thereafter, the polymerization system was heated up to 70°C and aged for 3 hours to complete polymerization to obtain a copolymer having an intrinsic viscosity of 0.56 (in dimethylformamide at 30°C).

C-2: In the same manner as in C-1, a copolymer comprising acrylonitrile (30 parts), α-methylstyrene (65 parts) and glycidyl methacrylate (5 parts) and having an intrinsic viscosity of 0.53 was prepared.

C-3: In the same manner as in C-1, a copolymer comprising acrylonitrile (23 parts), α-methylstyrene (52 parts) and glycidyl methacrylate (25 parts) and having an intrinsic viscosity of 0.68 was prepared.

Each epoxy-modified copolymer was salted out with calcium chloride and then recovered.

### Reference Example 4 Styrene base copolymer (D)

In the same manner as in C-1, copolymers D-1 to D-5 having the following compositions were prepared:

| | D-1 | D-2 | D-3 | D-4 | D-5 |
|---|---|---|---|---|---|
| STY | 70 | | 55 | | 40 |
| AMS | | 70 | | 60 | |
| ACN | 30 | 30 | 20 | 20 | 20 |
| N-PMI | | | 25 | 20 | 10 |
| MMA | | | | | 30 |
| Intrinsic viscosity | 0.55 | 0.53 | 0.60 | 0.49 | 0.51 |
| STY: Styrene AMS: α-Methylstyrene ACN: Acrylonitrile N-PMI: N-Phenylmaleimide MMA: Methyl methacrylate. | | | | | |

Each of the styrene base copolymer D-1 to D-5 was salted out with magnesium sulfate and then recovered.

### Examples and Comparative Examples

The saturated polyester (A), the rubber-reinforced styrene base resin (B), the epoxy-modified polymer (C) and the styrene base copolymer (D) shown in Reference Examples were compounded in a ratio shown in Table 1 and granulated with a twin screw extruder of 40 mm. The granulating temperature was 250°C.

The physical properties of each resin composition were measured as follows and the results are shown in Table 2:

### Notched Izod impact strength

According to ASTM D-256 (23°C).

### Chemical resistance

Flexural stress of 30 mm was applied on a molded article of 150 mm X 20 mm X 3mm which was fixed to a cantilever beam jig. Thereafter, the article was dipped in a chemical for 24 hours and the presence of cracked was observed.

A test piece used in the above tests was molded with a 3.5 ounce injection molding machine at a cylinder temperature of 250°C.

### Examples 1-6, 17 and 18 and Comparative Examples

### 1-3

These Examples show the effect of the epoxy-modified copolymer (C), and also the effect of the use of the α-methylstyrene base copolymer as the component (D).

### Examples 7 and 8 and Comparative Example 4

These Examples show the effect of the use of various saturated polyesters (A).

### Examples 9-11 and Comparative Examples 4 and 5

These Examples show the effect of amounts of the saturated polyester (A).

### Examples 12, 13 and 14

These Examples show the effect of the use of various rubber-reinforced styrene base resins.

### Examples 15 and 16 and Comparative Example 6

These Examples show the effect of amounts of the rubber in the whole composition.

### Examples 19 and 20

These Examples show the effect of the use of the maleimide base copolymer as the component (D).

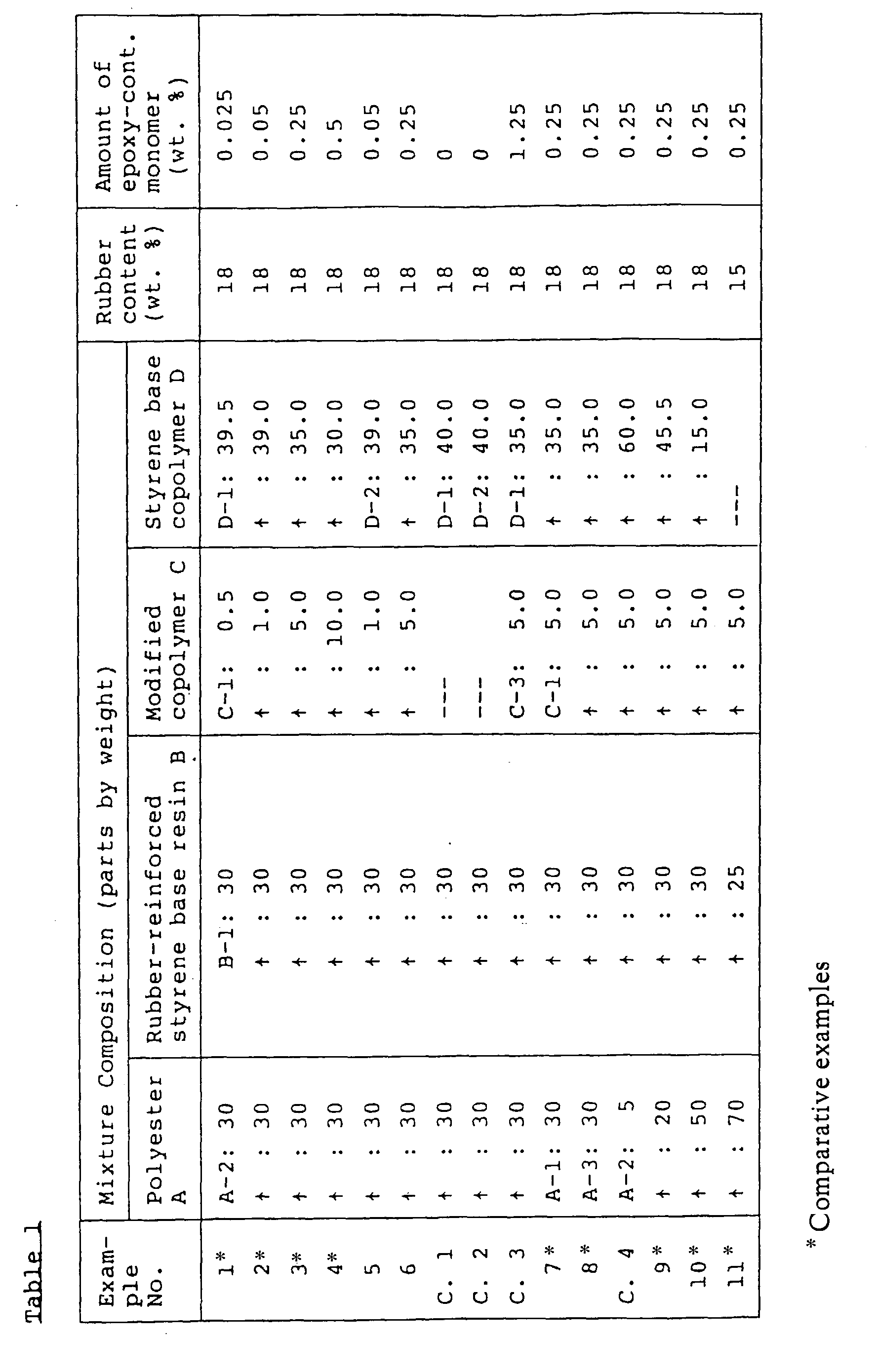

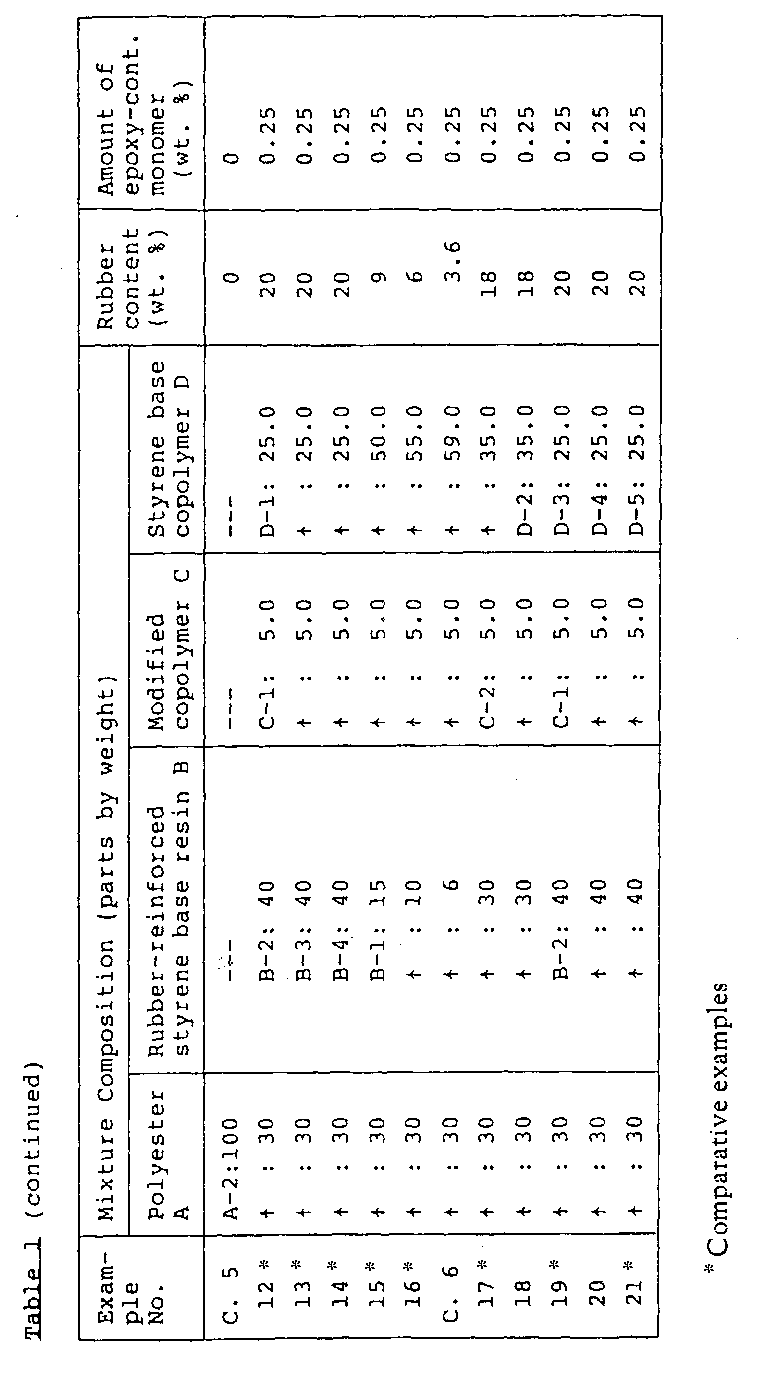

**Table 2**

| Example No. | Chemical resistance ^{*)} | | | Impact strength at 23°C (kg.cm/cm) | Heat resistance (°C) |
|---|---|---|---|---|---|
| | DOP ^{**)} | Brake fluid | Salaid oil | | |
| 1∗ | O | O | O | 33.1 | 85 |
| 2∗ | O | O | O | 54.2 | 85 |
| 3∗ | O | O | O | 52.7 | 86 |
| 4∗ | O | O | O | 45.3 | 87 |
| 5 | O | O | O | 58.5 | 93 |
| 6 | O | O | O | 56.1 | 93 |
| C. 1 | O | O | O | 12.3 | 84 |
| C. 2 | O | O | O | 13.5 | 92 |
| C. 3 | O | O | O | 8.2 | 86 |
| 7∗ | O | O | O | 48.3 | 85 |
| 8∗ | O | O | O | 57.9 | 87 |
| C. 4 | X | X | Δ | 23.1 | 82 |
| 9∗ | O | O | O | 42.3 | 86 |
| 10∗ | O | O | O | 59.2 | 83 |
| 11∗ | 0 | 0 | 0 | 63.1 | 81 |
| C. 5 | O | O | O | 4.5 | 68 |
| 12∗ | O | O | O | 65.9 | 83 |
| 13∗ | O | O | O | 43.7 | 82 |
| 14∗ | O | O | O | 61.3 | 85 |
| 15∗ | O | O | O | 17.3 | 87 |
| 16∗ | O | O | O | 14.7 | 87 |
| C. 6 | O | O | O | 4.8 | 88 |
| 17∗ | O | O | O | 48.3 | 86 |
| 18 | O | O | O | 53.1 | 92 |
| 19∗ | O | O | O | 58.5 | 92 |
| 20 | O | O | O | 69.0 | 98 |
| 21∗ | O | O | O | 55.3 | 85 |

| | | | | | |
|---|---|---|---|---|---|
| Note ^{*)} O: No change. Δ: Cracked. X: Broken. | | | | | |
| ^{**)} Dioctyl phthalate. | | | | | |
| ∗ : comparative examples | | | | | |

## Claims

1. A thermoplastic resin composition comprising:
(A) a saturated polyester resin,
(B) a rubber-reinforced styrene base resin which is obtainable by graft polymerizing 50 to 90 % by weight of an aromatic vinyl monomer, 10 to 50 % by weight of a cyanated vinyl monomer and 0 to 40 % by weight of other copolymerizable vinyl monomers in the presence of a rubbery polymer;
(C) an epoxy-modified copolymer which comprises 50 to 89.9 % by weight of an aromatic vinyl monomer, 10 to 49.9 % by weight of a cyanated vinyl monomer, 0.1 to 20 % by weight of an ethylenically unsaturated epoxy group-containing monomer and 0 to 39.9 % by weight of other copolymerizable vinyl monomers, and
(D) a styrene base copolymer which comprises 60 to 85 % by weight of α-methylstyrene, 0 to 20 % by weight of styrene, 15 to 40 % by weight of a cyanated vinyl monomer and 0 to 25 % by weight of at least one other copolymerizable vinyl monomer selected from the group consisting of alkyl unsaturated carboxylates and imide monomers,
wherein a content of said saturated polyester resin (A) is from 90 to 10 parts by weight, a total content of said rubber-reinforced styrene base resin (B) and said epoxy-modified copolymer (C) is from 90 to 10 parts by weight and a content of said styrene base copolymer (D) is from 5 to 60 parts by weight based on 100 parts by weight of the total weight of the polymers (A), (B), (C) and (D), and a content of said rubbery polymer is from 5 to 40 % by weight and a content polymer is from 5 to 40 % by weight and a content of said ethylenically unsaturated epoxy group-containing monomer is at least 0.001 % by weight based on the whole weight of the composition.

## Patentansprüche

1. Thermoplastische Harzzusammensetzung, umfassend:
(A) ein gesättigtes Polyesterharz;
(B) ein kautschukverstärktes Harz auf Styrolbasis, das durch Pfropfpolymerisieren von 50 bis 90 Gew.-% eines aromatischen Vinylmonomers, 10 bis 50 Gew.-% eines cyanierten Vinylmonomers und 0 bis 40 Gew.-% anderer copolymerisierbarer Vinylmonomere in Gegenwart eines kautschukartigen Polymers erhältlich ist;
(C) ein epoxymodifiziertes Copolymer, das 50 bis 89,9 Gew.-% eines aromatischen Vinylmonomers, 10 bis 49,9 Gew.-% eines cyanierten Vinylmonomers, 0,1 bis 20 Gew.-% eines ethylenisch ungesättigten epoxygruppenhaltigen Monomers und 0 bis 39,9 Gew.-% anderer copolymerisierbarer Vinylmonomere umfaßt; sowie
(D) ein Copolymer auf Styrolbasis, das 60 bis 85 Gew.-% eines α-Methylstyrols, 0 bis 20 Gew.-% Styrol, 15 bis 40 Gew.-% eines cyanierten Vinylmonomers und 0 bis 25 Gew.-% wenigstens eines anderen copolymerisierbaren Vinylmonomers, das aus der Gruppe ausgewählt ist, die aus Alkylestern ungesättigter Carbonsäuren und Imidmonomeren besteht, umfaßt;
wobei der Gehalt des gesättigten Polyesterharzes (A) 90 bis 10 Gewichtsteile beträgt, der Gesamtgehalt des kautschukverstärkten Harzes auf Styrolbasis (B) und des epoxymodifizierten Copolymers (C) 90 bis 10 Gewichtsteile beträgt und der Gehalt des Copolymers auf Styrolbasis (D) 5 bis 60 Gewichtsteile beträgt, bezogen auf 100 Gewichtsteile des Gesamtgewichts der Polymere (A), (B), (C) und (D), und der Gehalt des kautschukartigen Polymers 5 bis 40 Gew.-% beträgt und der Gehalt des ethylenisch ungesättigten epoxygruppenhaltigen Monomers wenigstens 0,001 Gew.-% beträgt, bezogen auf das Gesamtgewicht der Zusammensetzung.

## Revendications

1. Composition de résine thermoplastique, comprenant:
(A) une résine polyester saturée,
(B) une résine à base de styrène renforcée par du caoutchouc, qui peut être obtenue en polymérisant par greffage 50 à 90 % en poids d'un monomère vinylique aromatique, 10 à 50 % en poids d'un monomère vinylique cyané et 0 à 40 % en poids d'autres monomères vinyliques copolymérisables en présence d'un polymère caoutchouteux ;
(C) un copolymère modifié-époxy, qui comprend 50 à 89,9 % en poids d'un monomère vinylique aromatique, 10 à 49,9 % en poids d'un monomère vinylique cyané, 0,1 à 20 % en poids d'un monomère contenant au moins un groupe époxy, éthyléniquement insaturé, et 0 à 39,9 % en poids d'autres monomères vinyliques copolymérisables, et
(D) un copolymère à base de styrène qui comprend 60 à 85 % en poids de α-méthylstyrène, 0 à 20 % en poids de styrène, 15 à 40 % en poids d'un monomère vinylique cyané et 0 à 25 % en poids d'au moins un autre monomère vinylique copolymérisable choisi dans le groupe constitué des carboxylates d'alkyle insaturés et des monomères imides,
dans laquelle la teneur en ladite résine polyester saturée (A) est de 90 à 10 parties en poids, la teneur totale en ladite résine (B) à base de styrène renforcée par du caoutchouc et en ledit copolymère (C) modifié-époxy est de 90 à 10 parties en poids, et la teneur en ledit copolymère (D) à base de styrène est de 5 à 60 parties en poids sur la base de 100 parties en poids du poids total des polymères (A), (B), (C) et (D), et la teneur en ledit polymère caoutchouteux est de 5 à 40 % en poids et la teneur en ledit monomère contenant au moins un groupe époxy, éthyléniquement insaturé, est d'au moins 0,001 % en poids sur la base du poids total de la composition.
